Europäisches Patentamt

European Patent Office

Office européen des brevets

(11) Publication number: **0 085 252**
**B1**

(12) **EUROPEAN PATENT SPECIFICATION**

(45) Date of publication of patent specification: **16.04.86**

(51) Int. Cl.⁴: **B 60 T 1/06**

(21) Application number: **82306870.5**

(22) Date of filing: **22.12.82**

(54) A disc brake and vehicle axle assembly and a disc brake caliper assembly.

(30) Priority: **12.01.82 GB 8201182**

(43) Date of publication of application:
**10.08.83 Bulletin 83/32**

(45) Publication of the grant of the patent:
**16.04.86 Bulletin 86/16**

(84) Designated Contracting States:
**DE FR GB IT**

(56) References cited:
**EP-A-0 041 450**
**DE-A-2 934 608**
**DE-B-2 522 255**
**GB-A-1 256 713**
**GB-A-1 355 960**
**US-A-3 548 974**
**US-A-3 980 159**

**Society of Automotive Engineers paper No.
791041 "Straight Air Disc Brakes"**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Hodkinson, Harold
54 St. Martins Road
Finham Coventry (GB)**

(74) Representative: **Farrow, Robert Michael
Patent Department Automotive Products plc
Tachbrook Road
Leamington Spa Warwickshire CV31 3ER (GB)**

Courier Press, Leamington Spa, England.

## Description

The invention relates to a disc brake and vehicle axle installation. It is known to fit disc brakes to an axle which extends across a vehicle and has hub bearings for supporting wheels on opposite sides of the vehicle. If the disc brake has a sliding caliper and mechanical actuation is required for parking then it is usual to provide a spring actuator supported on the caliper (for large trucks) or a Bowden cable (for lighter vehicles). These arrangements ensure that there is no actuator reaction on the caliper.

A problem with a truck installation is that a spring actuator is both heavy and bulky. The guideways of the caliper have to be suitably proportioned to take the additional weight and the actuator can be placed in a vulnerable position, since it has to be clear of the suspension springs.

The present invention provides a disc brake and vehicle axle installation according to the preamble of claim 1, as known, e.g. from the Society of Automotive Engineers paper No. 791041, "Straight Air Disc Brakes", by P. J. Soltis, 1979, and characterised by the characterising features of claim 1. Such an installation comprises a brake disc mounted for rotation on a non-rotatable axle casing, a sliding caliper straddling the disc, a pair of brake pads respectively situated on opposite sides of the disc, a fixed support mounted on the axle casing, guide means on the fixed support for guiding the caliper in a path parallel to the axis of the disc, and an actuator mounted on the axle or vehicle chassis for applying a load to a lever which is pivotally mounted on the caliper, one arm of the lever extending away from the caliper in a direction substantially parallel to the axle and another arm of the lever having means for applying a thrust to the brake pad which is on the adjacent side of the disc, the other brake pad being applied to the disc by the reaction force of the lever on the caliper, the arrangement being such that the guide means allows limited tilting of the caliper about an axis perpendicular to the axis of the disc so that a large proportion of the twisting moment applied to the caliper by the lever is reacted by means other than the guide means.

Said means other than the guide means may be the brake pads and disc alone or may be the brake pads and disc plus parallel abutment faces on the fixed support and on the caliper, adjacent faces being normally spaced apart by a limited clearance which is closed when the caliper deflects on the fixed support under the action of the twisting moment applied by the lever.

Preferably, the caliper comprises an auxiliary lever mechanism interposed between said other arm and said pad and arranged to increase the mechanical advantage between the lever and said brake pad.

The invention will now be described by way of example and with reference to the accompanying drawings of which:—

Fig. 1 shows a vehicle axle and disc brake assembly according to the invention;

Fig. 2 is a view showing a modification to the disc brake assembly shown in Fig. 1;

Fig. 3 is a scrap-section of the caliper shown in Fig. 1 showing a further modification; and

Fig. 4 is a view similar to Fig. 1 showing a modified vehicle axle and disc brake assembly according to the invention.

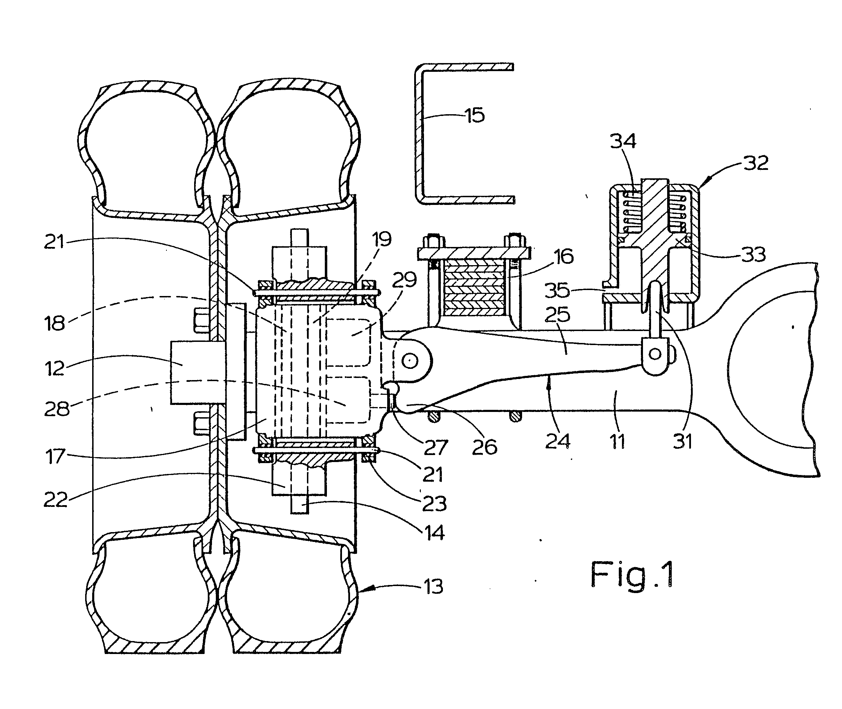

In Fig. 1 a live driving axle 11 has a casing which supports a hub 12 to which are attached for rotation twin road wheels 13 and a brake disc 14. The axle 11 supports part of the weight carried by the vehicle chassis 15 through a multi-leaf spring 16 bolted to the axle in a conventional manner. This also helps locate the axle casing against rotation.

A disc brake caliper 17 straddles both the disc 14 and a pair of brake pads 18 and 19 which are respectively situated on opposite sides of the disc, the caliper 17 being slidably mounted for movement parallel to the axis of the axle 11 by pins 21 which are a sliding fit in a support bracket 22 fixed to the axle casing. The pins 21 are supported in resilient bushes 23 in the caliper.

A lever 24 is pivotally mounted on the caliper 17 and has one arm 25 extending parallel to the axle and another arm 26 having means (in the form of a rounded tappet face) for applying load to the pad 19 which is on the adjacent side of the disc 14. The arm 26 applies its load through a plunger 27 which is connected through an automatic adjuster of known type to a piston inside a cylinder 28 in the caliper. There is another piston in another cylinder 29 and these provide hydraulic operation for service braking.

For parking braking, the arm 25 is connected through a pushrod 31 to a spring actuator 32 mounted on the axle 11. Normally the piston 33 of the spring actuator holds a spring 34 compressed by means of air supplied to port 35. When air is released from port 35, the spring applies a thrust to the pushrod 31 through the piston 33. The lever 24 then pivots so that pad 19 is applied by the plunger 27, pad 18 being applied by the reaction force of the lever 24 on the caliper 17.

The resilient bushes 23 allow a limited tilting of the caliper 17 about an axis perpendicular to the axis of the axle 11. By this means, a large proportion of the reaction to the twisting moment applied to the caliper by the lever 24 is taken by the pads 18 and 19 and the disc 14, the centres of pressure of the pads being offset. Any drag load of the pads is taken by the support bracket 22 in the usual way.

By extending parallel to the axle 11, the lever 25 creates no great installation problem, since it can easily avoid the leaf spring 16. The actuator 32 can also be installed well away from the spring 16 and its weight is supported by the axle. The pushrod 31 has sufficient articulation to allow for pad wear which will cause lateral shifting of the lever 24.

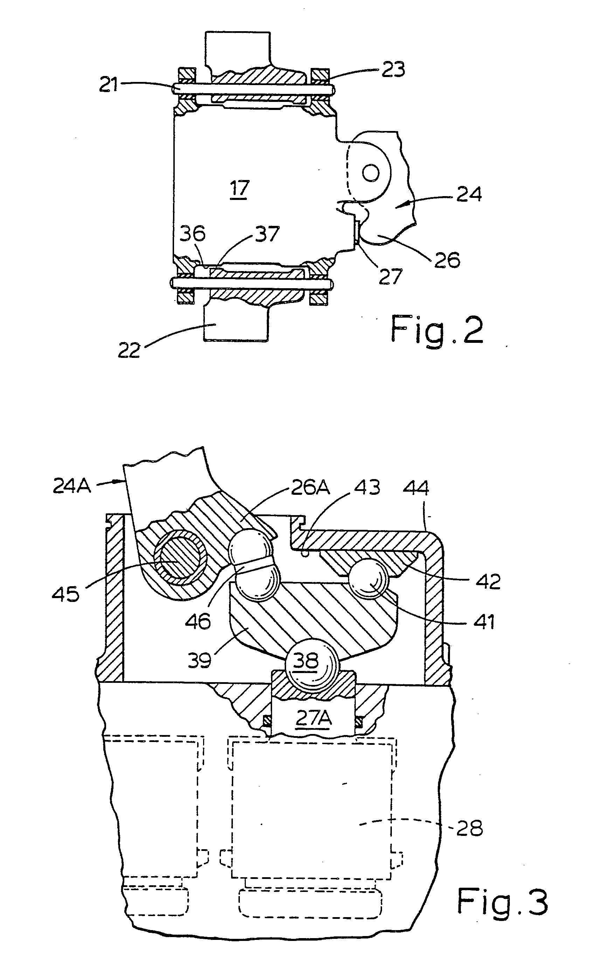

In Fig. 2 there is shown further additional means other than the guide pins for reacting the twisting moment applied to the caliper by the lever. This takes the form of parallel abutment faces 36 and 37 on the caliper 17 and on the fixed support bracket 22 respectively. Adjacent pairs of faces 36 and 37 are normally spaced apart by only a limited clearance, this being maintained during service braking. When the lever 24 is used to apply the brakes for parking or extreme emergency purposes and the caliper 17 deflects on the fixed support bracket 22 under the twisting moment applied by the lever, the clearance between two diagonally opposite adjacent pairs of faces 36 and 37 is closed so that the disc is spared from taking an excessive twisting load. The other diagonally opposite adjacent pairs of faces are provided so as to avoid making components peculiar to a particular side of the vehicle.

The twisting moment applied by the lever may be reduced by increasing the mechanical advantage between the lever and the plunger. Fig. 3 shows an auxiliary lever mechanism which achieves this. The plunger 27A has a recess for a ball 38 which sits in a similar recess in an auxiliary lever 39. A fulcrum is provided by another ball 41 which bears against a pivot block 42. This is free to slide on a flat surface 43 provided by a pivot housing 44 which also supports a pivot pin 45 for the main lever 24A. The load from lever arm 26A is transmitted through a thrust member or dolly 46 having part-spherical ends. The arrangement is such that the pad load is the sum of the lever load and the fulcrum load.

As shown, the auxiliary lever mechanism has a ratio of 2:1. However the auxiliary lever pivots are arranged such that lines intersecting the pivots form a triangle with angles substantially equal. When the lever 24A is moved clockwise the ratio rises with increasing stroke of the plunger 27A, since the centre of ball 41 moves towards the axis of the plunger 37A.

As an alternative to mounting the rubber bushes in the caliper, limited tilting of the caliper may be provided for by rubber bushes in the fixed support bracket. The fixed support bracket may be combined with an actuator support bracket for mounting on the axle if the installation allows or requires a shorter lever arm.

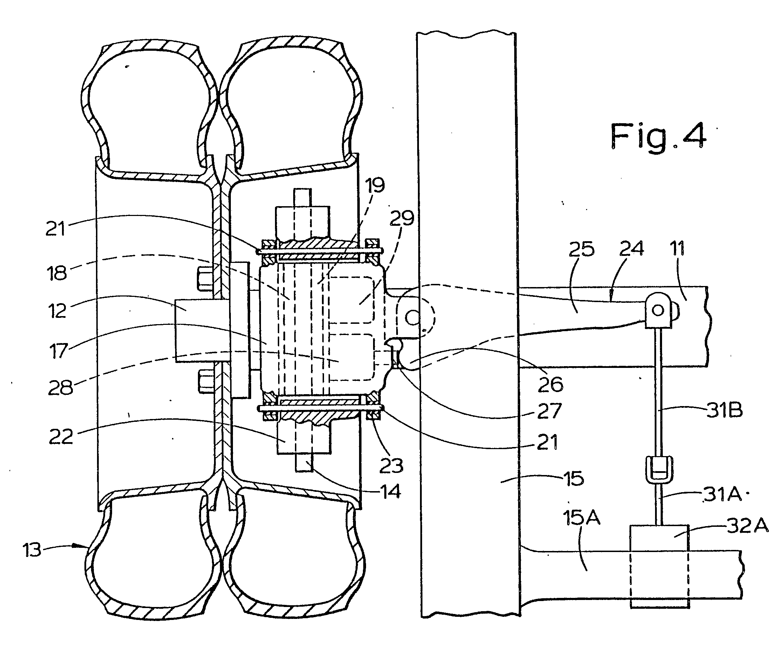

The axle mounted spring actuator may be replaced by an actuator mounted on the vehicle chassis, being a spring actuator or other power operated device or a conventional handbrake mechanism. This is exemplified by the modification shown in Fig. 4 which is a plan view rather than an elevation as seen in Fig. 1. All parts are the same as those in Fig. 1 and carry the same references except the actuator 32A which is now a pull type having an output rod 31A connected to the lever arm 25 by a pull rod 31B. The actuator 32A is mounted on a chassis cross-member 15A. The caliper 17 and fixed support are rotated 90° compared with Fig. 1.

**Claims**

1. A disc brake and vehicle axle installation comprising a brake disc (14) mounted for rotation on a non-rotatable axle casing (11), a sliding caliper (17) straddling the disc, a pair of brake pads (18, 19) respectively; situated on opposite sides of the disc, a lever (24) pivotally mounted on the caliper and having an arm (25) extending away from the caliper in a direction substantially parallel to the axle and having means (26, 26A) for applying a thrust to the brake pad (19) which is on the adjacent side of the disc, the other brake pad (18) being applied to the disc by the reaction force of the lever on the caliper, a fixed support (22) mounted on the axle casing, guide means (21, 23) on the fixed support and on the caliper for guiding the caliper in a path parallel to the axis of the disc and an actuator mounted for applying a load to the lever in a direction substantially perpendicular to the axis of the disc, characterised in that the actuator (32) is mounted on the axle (11) or vehicle chassis (15) and that the guide means (21, 23) allows limited tilting of the caliper (17) about an axis perpendicular to the axis of the disc so that a large proportion of the twisting moment applied to the caliper by the lever (24) is reacted by means (14, 18, 19; 36, 37) other than the guide means.

2. A disc brake and axle assembly according to Claim 1, characterised in that said means other than the guide means is the brake pads (18, 19) and disc (14).

3. A disc brake and axle assembly according to Claim 1, characterised in that said means other than the guide means is the brake pads (18, 19) and disc (14) supplemented by parallel abutment faces (36, 37) on the caliper (17) and fixed support (22), adjacent abutment faces (36, 37) being normally spaced apart by a limited clearance which is closed when the caliper deflects on the fixed support under the action of the twisting moment applied by the lever.

4. A disc brake and axle assembly according to any preceding claim, characterised in that the caliper (17) comprises an auxiliary lever mechanism (38, 39, 41, 42, 44) which increases the mechanical advantage between the lever (24A) and the adjacent brake pad (19).

5. A disc brake and axle assembly according to Claim 4, characterised in that the auxiliary lever mechanism comprises an auxiliary lever (39) having a fulcrum (41) carried by the caliper (17) and arranged so that the pad load is the sum of the lever load and the fulcrum load.

6. A disc brake and axle assembly according to Claim 5, characterised in that the auxiliary lever pivots (38, 41, 46) are arranged so that lines intersecting the pivots form a triangle and the auxiliary lever applies a load to the adjacent pad (19) through a pivot (38) which is constrained to move linearly with the pad, the fulcrum pivot (41) being movable transversely of the direction of pad movement as the lever (24A) is moved in the brake applying direction.

**Revendications**

1. Installation de frein à disque et d'essieu de véhicule comprenant un disque de frein (14) monté pour tourner sur un carter d'essieu non rotatif (11), un étrier coulissant (17), qui est à cheval sur le disque, une paire de patins de frein (18, 19) situés respectivement sur les deux faces opposées du disque, un levier (24) monté pivotant sur l'étrier et possédant un bras (25) qui s'étend dans le sens s'éloignant de l'étrier, dans une direction à peu près parallèle à l'essieu et comprenant des moyens (26, 26A) permettant d'appliquer une poussée au patin de frein (19) qui est sur le côté voisin du disque, l'autre patin (18) du frein étant serré contre le disque par la force de réaction exercée par le levier sur l'étrier, un support fixe (22) monté sur le carter de l'essieu, des moyens de guidage (21, 23) prévus sur le support fixe et sur l'étrier et servant à guider l'étrier selon une trajectoire parallèle à l'axe du disque, et un actionneur monté pour exercer un effort sur le levier dans un sens à peu près perpendiculaire à l'axe du disque, caractérisée en ce que l'actionneur (32) est monté sur l'essieu (11) ou sur le châssis (15) du véhicule et en ce que les moyens de guidage (21, 23) permettent une inclinaison limitée de l'étrier (17) autour d'un axe perpendiculaire à l'axe du disque de manière qu'une grande proportion du moment de torsion appliqué à l'étrier par le levier (24) soit absorbée en réaction par des moyens (14, 18, 19; 36, 37) autres que les moyens de guidage.

2. Installation de frein à disque et d'essieu selon la revendication 1, caractérisée en ce que lesdits moyens autres que les moyens de guidage sont les patins de frein (18, 19) et le disque (14).

3. Installation de frein à disque et d'essieu selon la revendication 1, caractérisée en ce que lesdits moyens autres que les moyens de guidage sont les patins de frein (18, 19) et le disque (14), complétés par des faces de butée parallèles (36, 37 prévues sur l'étrier (17) et sur le support fixe (22), les faces de butée (36, 37) voisines étant normalement espacées d'un jeu limité qui est fermé lorsque l'étrier s'incline sur le support fixe sous l'action du couple de torsion appliqué par le levier.

4. Installation de frein à disque et d'essieu selon l'une quelconque des revendications précédentes, caractérisée en ce que l'étrier (17) comprend un mécanisme à levier auxiliaire (38, 39, 41, 42, 44) qui augmente la multiplication d'effort mécanique entre le levier (24A) et le patin de frein voisin (19).

5. Installation de frein à disque et d'essieu selon la revendication 4, caractérisée en ce que le mécanisme à levier auxiliaire comprend un levier auxiliaire (39) ayant un point d'appui (41) porté par l'étrier (17) et agencé de telle manière que l'effort sur le patin soit la somme de l'effort sur le levier et de l'effort sur le point d'appui.

6. Installation de frein à disque et d'essieu selon la revendication 5, caractérisée en ce que les points d'articulation (38, 41, 46; du levier auxiliaire sont agencés de telle manière que les lignes coupant les points d'articulation forment un triangle et que le levier auxiliaire applique un effort au patin voisin (19) par l'intermédiaire d'un point d'articulation (38) que est contraint à se déplacer linéairement avec le patin, le point d'articulation (41) qui forme le point d'appui pouvant se déplacer transversalement à la direction du mouvement du patin lorsque le levier (24A) est mis en mouvement dans le sens du serrage du frein.

**Patentansprüche**

1. Scheibenbrems- und Fahrzeugachsanordnung mit einer Bremsscheibe (14), die auf einem nicht drehbaren Achsgehäuse (11) drehbar gelagert ist, einem Gleitsattel (17), der die Scheibe überbrückt, einem Paar Bremsklötze (18, 19), die auf entgegengesetzten Seiten der Scheibe jeweils angeordnet sind, einem Hebel (24), der schwenkbar an dem Sattel gelagert ist und einen Arm (25) hat, der sich in einer zu der Achse im wesentlichen parallelen Richtung von dem Sattel wegerstreckt und eine Einrichtung (26, 26A) zum Aufbringen einer Druckkraft auf den Bremsklotz (19), der auf der angrenzenden Seite der Scheibe ist, hat, wobei der andere Bremsklotz (18) durch die auf den Sattel ausgeübte Reaktionskraft des Hebels an die Scheibe angelegt wird, einem festen Träger (22), der an dem Achsgehäuse angeordnet ist, einer Führungseinrichtung (21, 23) an dem festen Träger und an dem Sattel zum Führen des Sattels auf einer zur Achse der Scheibe parallelen Bahn und einer Betätigungseinrichtung zum Aufbringen einer Last auf den Hebel in einer zur Achse der Scheibe im wesentlichen senkrechten Richtung, dadurch gekennzeichnet, daß die Betätigungseinrichtung (32) an der Achse (11) oder dem Fahrzeugchassis (15) angebracht ist und daß die Führungseinrichtung (21, 23) dem Sattel (17) ein begrenztes Kippen um eine zur Achse der Scheibe senkrechte Achse erlaubt, so daß einem großen Teil des durch den Hebel (24) auf den Sattel ausgeübten Drehmoments durch eine andere Einrichtung (14, 18, 19; 36, 37) als der Führungseinrichtung entgegengewirkt wird.

2. Scheibenbrems- und Achsanordnung nach Anspruch 1, dadurch gekennzeichnet, daß die Einrichtung, die anders als die Führungseinrichtung ist, aus den Bremsklötzen (18, 19) und der Scheibe (14) besteht.

3. Scheibenbrems- und Achsanordnung nach Anspruch 1, dadurch gekennzeichnet, daß die Einrichtung, die anders als die Führungseinrichtung ist, aus den Bremsklötzen (18, 19) und der Scheibe (14) besteht und durch parallele Widerlagerflächen (36, 37) an dem Sattel (17) und dem festen Träger (22) ergänzt wird, wobei benachbarte Widerlagerflächen (36, 37) durch einen begrenzten Abstand voneinander getrennt sind, der geschlossen wird, wenn der Sattel unter der Wirkung des von dem Hebel ausgeübten Drehmoments auf dem festen Träger ausweicht.

4. Scheibenbrems- und Achsanordnung nach irgendeinem vorhergehenden Anspruch, dadurch gekennzeichnet, daß der Sattel (17) einen Hilfshebelmechanismus (38, 39, 41, 42, 44) aufweist, der die mechanische Kraftverstärkung zwischen dem Hebel (24A) und dem benachbarten Bremsklotz (19) erhöht.

5. Scheibenbrems- und Achsanordnung nach Anspruch 4, dadurch gekennzeichnet, daß der Hilfshebelmechanismus eine Hilfshebel (39) aufweist, der einen von dem Sattel (17) abgestützten Hebelpunkt hat und so angeordnet ist, daß die Klotzkraft die Summe aus der Hebelkraft und der Hebelpunktkraft ist.

6. Scheibenbrems- und Achsanordnung nach Anspruch 5, dadurch gekennzeichnet, daß die Hilfshebeldrehpunkte (38, 41, 46) so angeordnet sind, daß die Drehpunkte schneidende Linien ein Dreieck bilden und der Hilfshebel eine Kraft auf den benachbarten Klotz (19) über einen Drehpunkt (38) aufbringt, der gezwungen ist, sich geradlinig mit dem Klotz zu bewegen, wobei der Hebelpunkt (41) quer zu der Klotzbewegungsrichtung bewegbar ist, wenn der Hebel (24A) in die Bremsanlegerichtung bewegt wird.

Fig.1

Fig.2

Fig.3

Fig. 4